# FASCICULE DE BREVET EUROPEEN

(11) **EP 3 471 356 B1**
(45) Date de publication et mention de la délivrance du brevet: **17.06.2020**
(21) Numéro de dépôt: 18198948.4
(22) Date de dépôt: 05.10.2018
(51) Int. Cl.: H04L 12/26, H04L 12/753, H04L 12/911, H04L 12/933, H04L 12/24, H04L 12/931, H04L 12/751

(54) **DISPOSITIF ET PROCEDE D'ACQUISITION DE VALEURS DE COMPTEURS ASSOCIES A UNE TACHE DE CALCUL**
VORRICHTUNG UND VERFAHREN ZUM ERFASSEN VON ZÄHLERWERTEN, DIE MIT EINER RECHENAUFGABE IN VERBINDUNG STEHEN
DEVICE AND METHOD FOR ACQUIRING METER VALUES ASSOCIATED WITH A CALCULATION TASK

(30) Priorité: 10.10.2017 FR 1759455
(43) Date de publication de la demande: 17.04.2019
(73) Titulaire: BULL SAS, 78340 Les Clayes sous Bois (FR)
(72) Inventeur: DUGUE, Sébastien, 38119 SAINT THEOFFREY (FR); FICET, Jean-Vincent, 73110 La Chapelle Blanche (FR); SCHIMARA, Marek, 38470 Vinay (FR)
(74) Mandataire: A.P.I. Conseil

(56) Documents cités:
- US-A1- 2013 121 154
- US-A1- 2016 014 049
- US-A1- 2017 214 614
- US-A1- 2017 257 316

## Description

L'invention concerne le domaine des réseaux d'interconnexion, et plus particulièrement de la surveillance de la performance d'un réseau d'interconnexion lors de la réalisation d'une tâche de calcul. L'invention propose un dispositif d'acquisition de valeurs de compteurs associées à une tâche de calcul mise en œuvre sur un réseau d'interconnexion, un procédé d'acquisition de valeurs pouvant être mis en œuvre par un tel dispositif ainsi qu'un procédé de planification de tâche de calcul mis en œuvre par un tel dispositif.

### [Art antérieur]

Le calcul haute performance, aussi appelé HPC (High Performance Computing en terminologie anglo-saxonne) se développe pour la recherche universitaire comme pour l'industrie, notamment dans des domaines techniques tels que l'aéronautique, l'énergie, la climatologie et les sciences de la vie. Ces calculs sont généralement mis en œuvre par des clusters. L'objectif de ces clusters est de dépasser les limites du matériel existant en mutualisant des ressources pour permettre l'exécution parallélisée d'instructions et l'agrégation de capacité mémoire et de disque.

Un cluster, est un ensemble de moyens de calcul (aussi appelés nœuds) interconnectés par un réseau d'interconnexion pouvant réaliser des opérations communes. Les clusters sont constitués d'un grand nombre de nœuds (typiquement plusieurs milliers), ces derniers étant interconnectés, par exemple de façon hiérarchique, par des commutateurs (typiquement plusieurs centaines), appelés *switch* en terminologie anglo-saxonne. Les réseaux ainsi constitués peuvent comprendre plusieurs dizaines milliers de ports. Chaque nœud est par exemple un serveur, un ordinateur ou plus généralement une machine.

En outre, chacun de ces ports peut présenter plus d'une centaine de compteurs (e.g. 186) dont l'objectif est de suivre de nombreuses caractéristiques du port telles que la performance ou les erreurs, notamment lors d'une tâche de calcul. Par exemple, selon le document US2017/025731, la surveillance et le contrôle d'un cluster, en particulier des commutateurs, sont typiquement réalisés de façon centralisée via un nœud dédié, appelé nœud d'administration. Un gestionnaire réseau (aussi appelé « Subnet Manager ») peut surveiller le réseau via ce nœud d'administration (cf. « Infiniband™ Architecture Volume 1 Release 1.3 »). Cette surveillance comporte notamment la surveillance de l'état de fonctionnement des composants du cluster pour, le cas échéant, alerter un administrateur d'un problème potentiel de matériel. Ainsi, étant donné qu'un réseau d'interconnexion peut comporter plusieurs centaines de commutateurs (e.g. 500) entrainant la présence de plusieurs milliers de ports (e.g. 30 000), le nombre de compteur à surveiller au niveau du gestionnaire réseau est extrêmement élevé. D'autres système de surveillance ont été proposés tel que celui décrit dans le document US2016/0014049 comprenant plusieurs gestionnaires et notamment des gestionnaires sous-réseau fonctionnant en mode veille. Il existe également, comme décrit dans le document US2017/0214614 ou le document US2013/0121154, des procédés capables d'envoyer des requêtes afin d'obtenir des informations de connectivités ou des alertes en cas d'encombrement.

Les outils actuels permettent d'enregistrer, au sein d'une base de données, les valeurs des différents compteurs de l'ensemble des ports d'un réseau d'interconnexion ou d'un ilot de calcul. Ainsi, un utilisateur peut consulter individuellement les valeurs de chacun de ces compteurs et afficher les variations en fonction du temps. Néanmoins, il n'est pas possible avec les outils actuels d'aisément identifier des défaillances d'équipement du réseau d'interconnexion dans le cadre d'une tâche de calcul particulière. En effet, en parallèle, un réseau d'interconnexion peut permettre la réalisation de plusieurs dizaines de tâche de calcul. En outre, une tâche de calcul va généralement nécessiter l'intervention de plusieurs dizaines ou centaines de nœuds et donc l'implication de plusieurs centaines ou milliers de ports lorsque l'ensemble des commutateurs impliqués dans la tâche sont pris en considération.

Lorsqu'un utilisateur a une tâche de calcul plus longue que prévu ou fait face à des problématiques de reproductibilité, il peut être nécessaire d'en identifier la cause. Habituellement, un tel utilisateur n'a pas la possibilité de faire rapidement ces vérifications. En effet, actuellement, un utilisateur peut identifier les nœuds impliqués dans une tâche de calcul qu'il vient de mener et suivre individuellement les compteurs de ces nœuds. Les valeurs des compteurs doivent, par exemple, être explorées manuellement en choisissant d'une part le port et d'autre part le compteur à étudier. Ainsi, il n'est pas possible de réaliser aujourd'hui rapidement une analyse de la performance d'un réseau d'interconnexion lors d'une tâche de calcul au regard des compteurs des ports impliqués dans ladite tâche. En effet, le gestionnaire de ressources a accès aux données de compteurs mais ne peut opérer de sélection relative à la tâche de calcul.

Ainsi, il existe un besoin pour de nouveaux dispositifs et méthodes permettant de suivre la performance d'un réseau d'interconnexion lors de la mise en œuvre d'une tâche de calcul de façon à rapidement identifier des erreurs pouvant impacter la tâche de calcul.

### [Problème technique]

L'invention a donc pour but de remédier aux inconvénients de l'art antérieur. En particulier, l'invention a pour but de proposer un dispositif d'acquisition de valeurs de compteurs associés à une tâche de calcul, ledit dispositif permettant d'accéder rapidement à des indicateurs de défaillances des équipements spécifiquement impliqués dans la tâche de calcul monitorée.

L'invention a également pour but de proposer un procédé d'acquisition de valeurs de compteurs associés à une tâche de calcul, ledit procédé étant rapide et simple à mettre en œuvre et permettant à un utilisateur, dans le cadre de l'épilogue d'une tâche de calcul, de facilement naviguer au sein d'indicateurs pertinents de performance pour une tâche de calcul spécifique et de visualiser rapidement d'éventuels dysfonctionnements dans un sous ensemble de réseau d'interconnexion utilisé pour cette tâche de calcul. Un tel procédé permet de réduire le temps consacré à la recherche d'un éventuel problème dans les équipements associés à cette tâche de calcul, en prenant en compte aussi bien les nœuds que les commutateurs impliqués dans la tâche de calcul.

### [Brève description de l'inventionl

A cet effet, l'invention porte sur un dispositif d'acquisition de valeurs de compteurs associées à une tâche de calcul mise en œuvre sur un réseau d'interconnexion, ledit réseau d'interconnexion comportant une pluralité de nœuds interconnectés par l'intermédiaire de commutateurs, lesdits nœuds et commutateurs comportant une pluralité de ports associés à des compteurs, les valeurs desdits compteurs étant enregistrées au cours du temps, ladite tâche de calcul impliquant un sous ensemble de ports associé à des sous-ensembles de nœuds et de commutateurs, et ledit dispositif comprenant :
- un module d'acquisition de routage, apte à acquérir une table de routage comportant toutes les connexions du réseau d'interconnexion,
- un module d'acquisition de nœuds impliqués, apte à acquérir une liste des nœuds impliqués dans la tâche de calcul,
- un module d'extraction de ports, apte à extraire une liste des ports impliqués dans la tâche de calcul à partir de la liste de nœuds impliqués et de la table de routage, et
- un module d'extraction de compteurs, apte à extraire les valeurs des compteurs des ports impliqués dans la tâche de calcul à partir de la liste de ports impliqués et des valeurs enregistrées desdits compteurs.

Cette invention permet notamment, par une succession d'étapes d'acquisition de données et d'extractions, de générer un ensemble de données relatives aux équipements impliqués dans une tâche de calcul. Cette invention permet notamment la génération d'une liste des ports impliqués dans une tâche de calcul en corrélant la liste des nœuds impliqués dans une tâche de calcul avec le routage utilisé par le réseau d'interconnexion. Cela permet de déterminer la liste complète de ports de nœuds et de commutateurs à inclure de façon à obtenir les valeurs de tous les compteurs pouvant expliquer un éventuel dysfonctionnement lors d'une tâche de calcul, sans se limiter aux extrémités du réseau impliqué (i.e. nœuds).

Ainsi, un tel dispositif communique avec plusieurs bases de données, ou sources d'informations, de façon à générer un nouveau jeu de données restreint aux données pouvant intéresser un utilisateur dans le cadre d'une tâche de calcul spécifique. L'utilisateur gagnera de nombreuses heures de recherche de défaillance par rapport à une recherche réalisée dans une liste de données soit trop volumineuse (i.e. l'ensemble des ports du réseau d'interconnexion) soit parcellaire (i.e. l'ensemble des ports des nœuds impliqués dans la tâche de calcul).

Ce dispositif permet également, lors de sa mise en œuvre, d'organiser et de filtrer des grands volumes de données aboutissant à l'extraction de valeurs essentiellement pertinentes pouvant ensuite être enregistrées dans un ou plusieurs fichiers (e.g. bases de données).

**Selon d'autres caractéristiques optionnelles du dispositif :**
- la tâche de calcul comporte une date de début et une date de fin, et le module d'extraction de compteurs est apte à comparer des valeurs des compteurs à la date de début et à la date de fin de la tâche, et à sélectionner des compteurs dont la valeur a augmenté entre le début et la fin de la tâche de calcul. Ainsi cela consiste à évaluer la différence entre la valeur du compteur à la fin de la tâche et la valeur du compteur au début de la tâche. Si la différence est nulle ou non significative alors les valeurs de compteur ne sont pas extraites. C'est-à-dire qu'un compteur dont la valeur reste constante au cours du temps ne sera pas sélectionné ou extrait. Cela permet de gagner en rapidité de traitement. En effet, le volume de données étant moindre, leur traitement est plus rapide, le volume de stockage de données nécessaire est plus faible et cela constitue également un gain de temps pour l'utilisateur qui n'a pas à parcourir des données sans intérêt (i.e. valeurs constantes).
- Il comporte en outre un module de génération de rapport apte à générer au moins un rapport d'analyse de performance à partir des valeurs des compteurs des ports impliqués dans la tâche de calcul, ledit rapport comprenant avantageusement des indicateurs de performance du réseau d'interconnexion pour ladite tâche de calcul. Ainsi, un utilisateur pourra accéder à un rapport comportant des informations sur les équipements ayant potentiellement ralenti ou perturbé la tâche de calcul.
- Le module de génération de rapport est apte à recevoir une instruction, ladite instruction comportant la désignation d'une ou de plusieurs catégories de compteurs et ledit module de génération de rapport est alors apte à générer un rapport d'analyse de performance comportant une liste de ports impliqués et les valeurs du ou des compteurs désignés pour ces ports. Dans ce cas, le dispositif peut générer des informations ciblées à partir d'une instruction comportant une identification d'un compteur spécifique.
- Le module de génération de rapport est apte à recevoir une instruction, ladite instruction comportant la désignation d'un ou plusieurs niveaux du réseau d'interconnexion et ledit module de génération de rapport est alors apte à générer un rapport d'analyse de performance portant sur lesdits un ou plusieurs niveaux du réseau d'interconnexion, de préférence un seul niveau. Ainsi, comme cela sera présenté dans la suite de la description, le dispositif est apte à permettre rapidement l'identification de la zone de perturbation éventuelle dans le réseau d'interconnexion.
- Le module de génération de rapport comporte des moyens pour réaliser une agrégation des valeurs de compteurs impliqués, ledit module de génération de rapport est alors apte à générer un rapport d'analyse de performance comportant des valeurs agrégées des compteurs impliqués.
- Il comprend en outre un module de mémorisation apte à enregistrer des tables de routage, des listes de nœuds impliqués dans une tache de calcul, des listes de ports impliqués dans une tache de calcul, des rapports d'analyse de performance et/ou les valeurs des compteurs des ports impliqués dans une tâche de calcul, de préférence sous la forme d'une base de type round-robin.
- Le module d'acquisition de routage est apte à réaliser une exploration du réseau d'interconnexion de façon à collecter les tables de routage, de préférence en temps réel. Avantageusement, les tables de routages sont acquises à partir d'une mémoire apte à stocker des informations de routage telles que des tables de routage.
- Le module d'extraction de ports (30), est apte à extraire une liste des ports impliqués comportant seulement les ports impliqués dans la tâche de calcul.
- Le module d'acquisition de nœuds impliqués (20) est apte à recevoir la date de début et la date de fin de la tâche de calcul et en ce que le module d'extraction de compteurs (40) est apte à comparer des valeurs des compteurs à la date de début et à la date de fin de la tâche, et à extraire des compteurs dont la valeur a augmenté entre le début et la fin de la tâche de calcul.

L'invention porte en outre sur un procédé d'acquisition, par un dispositif, de valeurs de compteurs associées à une tâche de calcul commandée par un client et mise en œuvre sur un réseau d'interconnexion, ledit réseau d'interconnexion comportant une pluralité de nœuds interconnectés par l'intermédiaire de commutateurs, lesdits nœuds et commutateurs comportant une pluralité de ports associés à des compteurs, les valeurs desdits compteurs étant enregistrées au cours du temps, ladite tâche de calcul impliquant un sous ensemble de ports associé à des sous-ensembles de nœuds et de commutateurs, et ledit procédé comprenant les étapes suivantes :
- Acquisition, par un module d'acquisition de routage, d'une table de routage comportant toutes les connections du réseau d'interconnexion,
- Acquisition, par un module d'acquisition de nœuds impliqués, d'une liste des nœuds impliqués dans la tâche de calcul, ladite liste de nœuds impliqués étant enregistrée sur le client,
- Extraction, par un module d'extraction de ports, d'une liste des ports impliqués dans la tâche de calcul à partir de la liste de nœuds impliqués et de la table de routage,
- Extraction, par un module d'extraction de compteurs, des valeurs des compteurs des ports impliqués dans la tâche de calcul à partir de la liste de ports impliqués et des valeurs enregistrées desdits compteurs.
Un tel procédé permet de générer un ensemble de valeurs de compteurs des ports impliqués dans une tâche de calcul et donc de pouvoir ensuite rapidement traiter ou visualiser ces valeurs de façon à identifier d'éventuels dysfonctionnement dans des équipements du sous ensemble du réseau d'interconnexion ayant été impliqué dans la tâche de calcul.

L'invention porte en outre sur un procédé de planification, par un client, d'une tâche de calcul mise en œuvre sur un réseau d'interconnexion, ledit réseau d'interconnexion comportant une pluralité de nœuds interconnectés par l'intermédiaire de commutateurs, lesdits nœuds et commutateurs comportant une pluralité de ports associés à des compteurs, les valeurs desdits compteurs étant enregistrées au cours du temps, ladite tâche de calcul impliquant un sous ensemble de ports associé à des sous-ensembles de nœuds et de commutateurs, et ledit procédé comprenant les étapes suivantes :
- Réception, par exemple par le client, d'une instruction de mise en place d'une tâche de calcul, ladite tâche de calcul comportant une liste de ressources nécessaires à sa réalisation,
- Identification d'un sous-ensemble de nœuds correspondant à la liste de ressources nécessaires à la réalisation de la tâche de calcul,
- Initiation de la tâche de calcul sur le sous-ensemble de nœuds identifiés,
- Réception, par exemple par le client, du rapport de tâche de calcul finalisé.

Dans un mode particulier, ce procédé comprend en outre les étapes suivantes:- Envoi, par le client, d'une instruction à un dispositif d'acquisition de valeurs selon l'une des revendications 3 à 6 et
- Réception, par le client, d'un ou plusieurs rapports d'analyse de performance à partir des valeurs des compteurs des ports impliqués dans la tâche de calcul fournis par ledit dispositif d'acquisition de valeurs.

Cela permet dans le cadre de la planification d'une tâche de calcul, par un utilisateur, de directement recevoir un rapport d'analyse de performance ciblé par exemple lors de l'épilogue de la planification de ladite tâche de calcul. Ce rapport d'analyse de performance ciblé concerne spécifiquement les équipements, et plus particulièrement les ports impliqués dans la tâche de calcul.

D'autres avantages et caractéristiques de l'invention apparaitront à la lecture de la description suivante donnée à titre d'exemple illustratif et non limitatif, en référence aux Figures annexées qui représentent :
- Figure 1, un exemple de topologie de cluster associé à un dispositif d'acquisition de valeurs de compteurs selon l'invention ;
- Figure 2, une représentation schématique d'un procédé d'acquisition de valeurs de compteurs selon l'invention ;
- Figures 3A à 3D, des représentations graphiques des valeurs de compteurs associés à une tâche de calcul en fonction du temps. Les compteurs représentés étant représentatifs des données transmises par les ports considérés à savoir les ports des nœuds de calcul (Fig. 3A), les ports de l'ensemble des nœuds et commutateurs impliqués dans la tâche de calcul (Fig. 3B), les ports des commutateurs de premier niveau (Fig. 3C) et les ports des commutateurs de second niveau (Fig. 3D).
- Figure 4, une représentation schématique d'un procédé de planification d'une tâche de calcul selon l'invention.

### [Description de l'invention]

Dans la suite de la description, on entend par « réseau d'interconnexion », tout réseau de calcul dédié (tel qu'un réseau InfiniBand - InfiniBand est une marque), ou plus généralement toute collection d'éléments informatiques, notamment des processeurs distribués, avec des liaisons de communication physiques entre eux. Un réseau d'interconnexion, est généralement au sens de l'invention un ensemble de moyens de calcul (aussi appelés nœuds) interconnectés pouvant réaliser des opérations communes. Les clusters sont généralement constitués de milliers de nœuds interconnectés par des centaines commutateurs. Les réseaux ainsi constitués peuvent comprendre plusieurs dizaines milliers de ports. Ces ports sont associés à des compteurs permettant par exemple de suivre la performance de l'équipement.

On entend, ici, par « compteurs » un moyen permettant de suivre les paquets ou données et les erreurs qui se produisent sur un port ou une interface d'un commutateur ou d'un nœud. Ainsi, les compteurs sont plus particulièrement des compteurs de performance associés à des ports et sont généralement utilisés pour surveiller les données transmises, les caractéristiques du transport et les erreurs générées par l'équipement. Par exemple, les compteurs peuvent suivre, le volume des données transmises, le nombre de fois où une collision s'est produite avant que l'interface ne transmette une donnée avec succès, le nombre de paquets ignorés, le nombre de paquets reçus rejetés car il n'y avait pas d'espace tampon, etc. Ces compteurs permettent ainsi de produire des données relatives au trafic sur le sous ensemble du réseau d'interconnexion considéré. Ces compteurs sont généralement des compteurs incrémentaux n'ayant pas besoin d'être remis à zéro entre chaque tâche de calcul.

Par « tâche de calcul », on entend au sens de l'invention un ensemble de calculs pouvant par exemple se décomposer en une répétition d'un calcul élémentaire effectué sur des données ayant une même structure ou une succession de calculs différents où des calculs sont appliqués aux résultats de calculs précédents. Une tâche de calcul dans le cadre de l'invention peut se référer par exemple à une modélisation moléculaire, à des prévisions météorologiques, à des opérations mathématiques complexes par exemple de type simulations Monte Carlo pour l'analyse des risques financiers, à des conceptions assistées par ordinateur ou encore à des millions de balayages paramétriques parallèles pour l'optimisation de conditions.

Par ailleurs, on entend au sens de l'invention par « topologie d'interconnexion », l'architecture définissant l'intégralité des liaisons, des connexions (ou interconnexions) entre tous les nœuds de service d'un réseau d'interconnexion. Il peut s'agir d'un graphique non orienté où les sommets représentent, par exemple, des commutateurs et des nœuds, et les arcs représentent les liaisons (ou câbles). On notera qu'il existe plusieurs topologies telles que celles dites hiérarchiques, celles en anneau ou celles à maillage. Parmi ces topologies, il peut notamment être cité celles appelées en terminologie anglo-saxonne « Fat-tree », « Generalized Fat Tree », « Hypercube », « Generalized Hypercube », 2D/3D Torus, et Mesh, certains de ces termes sont également des marques.

Au sens de l'invention, une « table de routage » correspond à un ensemble de données, par exemple des règles, permettant de déterminer où seront acheminées les données circulant sur un réseau d'interconnexion. Cet ensemble de règles pouvant être enregistrées dans une ou plusieurs tables de routage, par exemple sous la forme d'un ou de plusieurs fichiers. Une table de routage permet d'enregistrer la topologie du réseau d'interconnexion. La table de routage peut être utilisée dans le cadre d'un routage déterministe et/ou adaptatif. Lors d'un routage déterministe, le routage est basé sur la destination, ce qui signifie que lorsqu'un paquet est dans un nœud ou un commutateur, le reste du chemin à parcourir sera déterminé par sa destination. Une table de routage peut par exemple prendre la forme d'une base de données relationnelle constituée d'éléments de données dotés d'une relation prédéfinie entre eux. Par exemple, ces éléments peuvent être organisés en tableaux composés de colonnes et de rangées permettant de répertorier les informations sur les routes entre différents nœuds représentés dans la base de données. De façon préférée, la table de routage est une table de routage statique distribuée.

On entend par « agrégation » la mise en œuvre d'une ou de plusieurs opérations mathématiques permettant par exemple de générer un sous ensemble réduit de valeurs à partir d'un ensemble plus volumineux de valeurs. Par exemple, une agrégation peut correspondre à la sélection des dix valeurs de compteurs les plus élevées, ou les plus faibles parmi les valeurs de compteurs des ports impliqués. Une agrégation au sens de l'invention peut également comporter la génération d'une valeur transformée telle que : une valeur de progression (via une soustraction de la valeur à la fin de la tâche de calcul par la valeur au début de la tâche de calcul, une valeur dans le temps (la division des valeurs de volume de donné échangé par le temps de façon à obtenir des valeurs de débit), une valeur moyenne, une valeur médiane ou encore une valeur de variance. L'agrégation peut également permettre de sélectionner une valeur extrême faible d'un compteur par exemple via le calcul d'un percentile inférieur ou égale à dix tandis qu'une valeur extrême élevée de compteur peut par exemple être sélectionnée parmi les percentiles supérieurs ou égaux à 90. Cela peut par exemple être utile de façon à identifier des débits très élevés ou au contraire très faibles. L'agrégation peut aussi consister à sélectionner les valeurs les plus élevées ou les plus faibles pour des catégories de compteurs données.

On entend par « fichier de configuration » au sens de l'invention, un fichier comprenant les informations nécessaires notamment à la mise en œuvre du procédé selon l'invention. Les fichiers sont accessibles aux différents modules du dispositif selon l'invention.

On entend par «traiter», «calculer», «déterminer», «afficher», «comparer» ou plus largement « opération exécutable », au sens de l'invention, une action effectuée par un dispositif ou un processeur sauf si le contexte indique autrement. À cet égard, les opérations se rapportent à des actions et / ou des processus d'un système de traitement de données, par exemple un système informatique ou un dispositif informatique électronique, qui manipule et transforme les données représentées en tant que quantités physiques (électroniques) dans les mémoires du système informatique ou d'autres dispositifs de stockage, de transmission ou d'affichage de l'information. Ces opérations peuvent se baser sur des applications ou des logiciels.

Les termes ou expressions « application », « logiciel », « code de programme », et « code exécutable » signifient toute expression, code ou notation, d'un ensemble d'instructions destinées à provoquer un traitement de données pour effectuer une fonction particulière directement ou indirectement (e.g. après une opération de conversion vers un autre code). Les exemples de code de programme peuvent inclure, sans s'y limiter, un sous-programme, une fonction, une application exécutable, un code source, un code objet, une bibliothèque et/ou tout autre séquence d'instructions conçues pour l'exécution sur un système informatique.

On entend par « processeur », au sens de l'invention, au moins un circuit matériel configuré pour exécuter des opérations selon des instructions contenues dans un code. Le circuit matériel peut être un circuit intégré. Des exemples d'un processeur comprennent, sans s'y limiter, une unité de traitement central, un processeur graphique, un circuit intégré spécifique à l'application (ASIC) et un circuit logique programmable.

On entend par « couplé », au sens de l'invention, connecté, directement ou indirectement avec un ou plusieurs éléments intermédiaires. Deux éléments peuvent être couplés mécaniquement, électriquement ou liés par un canal de communication.

L'expression « interface homme-machine » au sens de l'invention correspond à tout élément permettant à un être humain de communiquer avec un ordinateur en particulier et sans être exhaustif, un clavier et des moyens permettant en réponse aux ordres entrés au clavier d'effectuer des affichages et éventuellement de sélectionner à l'aide de la souris ou d'un pavé tactile des éléments affichés sur l'écran.

Le terme « dysfonctionnement » au sens de l'invention correspond à la survenue d'un incident matériel ou d'une congestion sur le réseau d'interconnexion.

On entend par « client » au sens de la présente invention, tout matériel et/ou logiciel susceptible d'accéder au dispositif d'acquisition de valeurs de compteurs.

Dans la suite de la description, les mêmes références sont utilisées pour désigner les mêmes éléments.

Généralement, dans le cadre de la mise en place d'un réseau d'interconnexion, au moment de l'initialisation, un **gestionnaire réseau 500** initie une phase de découverte où il réalise, via un nœud d'administration 111, un balayage du réseau d'interconnexion afin de découvrir tous les commutateurs 120 et les nœuds 110. Ensuite, il procède à l'affectation d'identifiant par exemple de type LID ou GID, à la configuration des commutateurs 120, aux calculs d'une table de routage et à la configuration des ports 130. À ce stade, un réseau d'interconnexion 100 est prêt à l'emploi. Une fois que le réseau est configuré, le gestionnaire réseau 500 peut surveiller tout changement sur le réseau d'interconnexion 100 (e.g. un périphérique est ajouté ou un lien est supprimé). Le gestionnaire réseau 500 peut également être couplé à une mémoire 510 apte à stocker des informations de routage telles que des tables de routage.

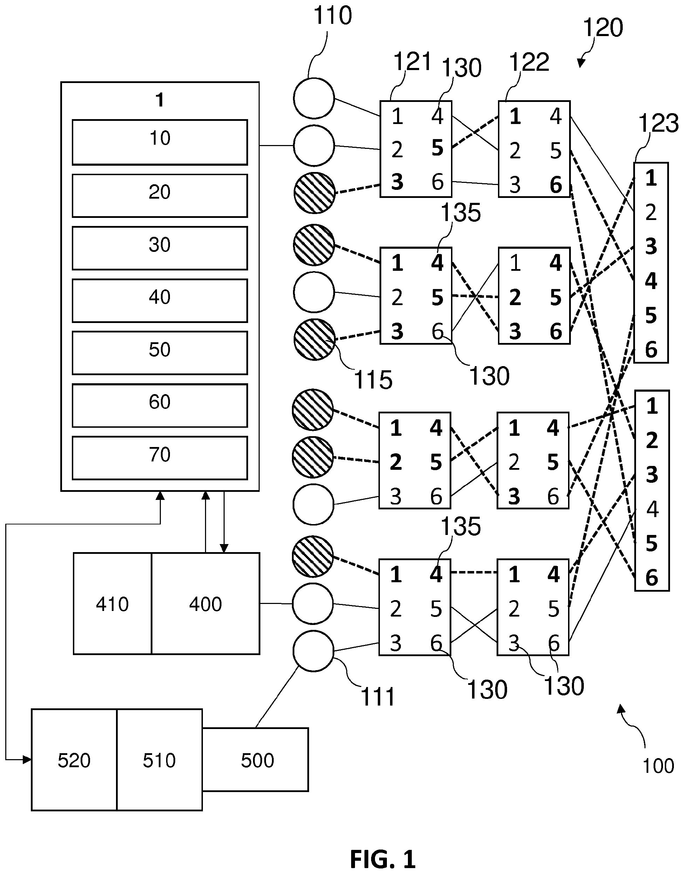

Dans l'exemple illustré sur la **figure 1**, le réseau d'interconnexion 100 comprend ici un ensemble de nœuds référencés 110 dont un nœud d'administration 111, ainsi qu'un ensemble de commutateurs référencés 120. Chaque commutateur a ici six ports bidirectionnels 130 numérotés 1 à 6. Les nœuds 110 sont connectés à des commutateurs de premier niveau 121 qui sont eux-mêmes reliés à des commutateurs de deuxième niveau 122 qui sont à leur tour reliés à deux commutateurs de troisième niveau 123. Les commutateurs 120, c'est-à-dire 121, 122 et 123, routent des messages de leurs sources vers leurs destinations notamment selon des règles inscrites dans des tables de routages. Les commutateurs 121 sont chacun connectés à trois nœuds 110 différents. Chaque nœud 110 est donc ici connecté à chacun des autres nœuds 110 via au plus cinq commutateurs 120.

Selon un aspect, l'invention porte sur un **dispositif 1 d'acquisition de valeurs de compteurs associées à une tâche de calcul** mise en œuvre sur un réseau d'interconnexion 100. Le réseau d'interconnexion 100 comporte généralement une pluralité de nœuds 110 interconnectés par l'intermédiaire de commutateurs 120, lesdits nœuds et commutateurs comportant une pluralité de ports 130 associés à des compteurs. Sur un tel réseau, des valeurs de compteurs sont généralement enregistrées au cours du temps. Cet enregistrement au cours du temps peut par exemple être un enregistrement en continu (e.g. toutes les 30 secondes ou moins, de préférence toutes les 10 secondes ou moins) de la valeur de chaque compteur de port de chaque équipement concerné. Cela peut représenter près de deux cent compteurs à enregistrer périodiquement par port. Cet enregistrement peut être fait dans un ou plusieurs fichiers sous différents formats tels que : OpenTSDB, InfluxDB, collectd, ou csv. Cet enregistrement peut être réalisé par un agent situé sur les nœuds 110, des commutateurs 120 et/ou par un gestionnaire réseau 500. Par exemple, les valeurs des compteurs peuvent être enregistrées au cours du temps dans une mémoire 520 apte à stocker des valeurs de compteurs, ladite mémoire 520 étant de préférence une base de type round-robin.

La tâche de calcul implique généralement un sous ensemble de ports associé à des sous-ensembles de nœuds et de commutateurs. En effet, un réseau d'interconnexion 100 est en mesure de mettre en œuvre en parallèle plusieurs dizaines ou centaines de tâches de calcul. Ainsi, une tâche de calcul n'implique pas tous les ports 130 d'un réseau d'interconnexion mais seulement un sous ensemble de nœuds et un sous ensemble de ports. Un sous ensemble de nœuds peut aussi être appelé nœuds impliqués 115 (i.e. impliqués dans la tâche de calcul) tandis qu'un sous ensemble de ports peut aussi être appelé ports impliqués 135. Pour illustrer cela, dans la figure 1, les ports impliqués 135 dans une tâche de calcul ont été signalés par une mise en forme « en gras » tandis que les nœuds impliqués 115 sont hachurés.

Comme représenté sur la figure 1, le dispositif 1 d'acquisition selon l'invention comprend un **module d'acquisition de routage 10.** Ce module est apte à acquérir une table de routage comportant toutes les connexions du réseau d'interconnexion 100.

La table de routage peut par exemple être obtenue par l'intermédiaire du gestionnaire de réseau 500 ou des nœuds 110 et des commutateurs 120. En effet, au démarrage ou lors d'une modification de la topologie du réseau, le gestionnaire de réseau 500 procède généralement à une découverte de la topologie, au calcul d'une table de correspondance pour chacun des commutateurs 120, et à une transmission de celle-ci aux commutateurs 120.

De façon préférée, le module d'acquisition de routage 10 est apte à acquérir la table de routage comportant les données sur toutes les connexions du réseau d'interconnexion à partir d'une mémoire 510 apte à stocker des informations de routage telles que des tables de routage. Avantageusement, l'acquisition est réalisée en temps réel. C'est-à-dire que la découverte est réalisée périodiquement au cours du temps, par exemple en continue (e.g. toutes les 30 secondes ou moins, de préférence toutes les 10 secondes ou moins). Le module d'acquisition de routage 10 peut également être apte à réaliser une exploration du réseau d'interconnexion 100 avant, au cours et/ou après la mise en œuvre de la tâche de calcul. Alternativement, le module d'acquisition de routage 10 est apte à réaliser une exploration du réseau d'interconnexion 100 de façon à identifier l'ensemble des commutateurs du réseau d'interconnexion. Le module d'acquisition de routage 10 est ensuite apte à télécharger les tables de routage depuis les commutateurs du réseau d'interconnexion. Ainsi, le dispositif selon l'invention pourrait générer l'ensemble de valeurs de compteurs impliqués sans dépendances aux gestionnaires ou aux applications installées sur le réseau d'interconnexion. Cela offre une flexibilité plus importante au dispositif.

La table de routage peut être enregistrée dans un ou plusieurs fichiers et par exemple sous la forme d'une base de données relationnelle comportant des informations relatives à tous les équipements avec tous les ports et toutes les connexions entre les ports. La table de routage peut par exemple être enregistrée à intervalle régulier par exemple une fois par jour, de préférence au moins une fois toutes les heures, de façon plus préférée au moins deux fois toutes les heures. Ainsi, avantageusement, le module d'acquisition de routage 10 est apte à enregistrer un historique de la topologie du réseau d'interconnexion 100.

En outre, le module de routage 10 peut être configuré pour réaliser une étape d'analyse des tables de routage de façon à identifier, au cours de la durée de la tâche de calcul, une éventuelle modification de la table de routage tel qu'un re-routage. Le module de routage 10 est apte à générer une alerte dans le cas d'une telle modification de la table de routage.

Comme représenté sur la figure 1, le dispositif 1 d'acquisition selon l'invention comprend un **module d'acquisition de nœuds impliqués 20.** Ce module est apte à acquérir une liste des nœuds impliqués 115 dans la tâche de calcul.

La Figure 1 schématise un client 400. Le dispositif d'acquisition 1 peut accéder au client 400 de même que ce dernier peut accéder au dispositif d'acquisition 1. Par exemple, le dispositif d'acquisition 1 peut accéder au client 400 de façon à extraire la liste des nœuds impliqués 115 dans la tâche de calcul. Une telle liste des nœuds impliqués 115 peut par exemple être enregistrée dans une mémoire 410.

En effet, le client 400 peut permettre la mise en œuvre d'au moins un gestionnaire de tâche et de ressources par exemple sélectionné parmi : LSF, PBSpro, Moab, Slurm, ou Torque/Maui. Ces gestionnaires de ressources sont capables de gérer la mise en œuvre d'une tâche de calcul sur un réseau d'interconnexion. Plus spécifiquement, le gestionnaire de ressource est apte à assigner un identifiant unique à une tâche de calcul, préciser les paramètres nécessaires à la réalisation de la tâche de calcul, éventuellement spécifier des nœuds à assigner à la tâche de calcul et mémoriser les nœuds étant utilisé par la tâche de calcul. Ainsi, un gestionnaire de ressource est capable de recevoir les soumissions de tâches de calcul d'utilisateurs et de gérer leur mise en œuvre dans le temps et dans l'espace sur le cluster. Les gestionnaires de ressources permettent ainsi un ordonnancement des tâches de calcul. Plus particulièrement, dans le processus d'allocation de tâches, le gestionnaire de ressource affecte non seulement le nœud de calcul pour l'exécution du travail, mais aussi la période de temps dans laquelle le travail peut utiliser le nœud de calcul.

Ainsi, le client 400 comporte avantageusement des données permettant d'identifier les nœuds utilisés par une tâche de calcul donnée. En effet, une tâche de calcul utilise un sous-ensemble de nœuds et de commutateurs du réseau d'interconnexion 100. Ce sous-ensemble est alloué par un gestionnaire de ressources qui peut être hébergé sur le client 400. Afin d'analyser les performances d'un réseau d'interconnexion dans le cadre d'une tâche de calcul spécifique, il est avantageux de pouvoir analyser les compteurs de ports utilisés par ce dernier et seulement ces compteurs. Ainsi, l'acquisition des nœuds impliqués 115 peut par exemple être réalisé par l'intermédiaire d'un gestionnaire de ressources.

De façon préférée, le module d'acquisition de nœuds impliqués 20 est apte à générer une instruction comportant un identifiant unique de la tâche de calcul, l'envoyer à un client 400 et recevoir en réponse une liste des nœuds impliqués 115 dans la tâche de calcul.

Avantageusement, outre la liste des nœuds impliqués 115 dans la tâche de calcul, le module d'acquisition de nœuds impliqués 20 est apte à recevoir la date de début et la date de fin de la tâche de calcul.

Comme représenté sur la figure 1, le dispositif 1 d'acquisition selon l'invention comprend un **module d'extraction de ports 30.** Ce module est apte à extraire une liste des ports impliqués 135 dans la tâche de calcul à partir d'une liste de nœuds impliqués 115 et d'une table de routage. La liste des ports impliqués 135 comporte avantageusement les ports des nœuds 115 impliqués dans la tâche de calcul ainsi que les ports des commutateurs impliqués.

Avantageusement, une liste des ports impliqués 135 dans la tâche de calcul comporte seulement les ports 135 impliqués dans la tâche de calcul. Ainsi, contrairement à des dispositifs ou des procédés de l'art antérieur, il n'y a pas prise en considération des ports qui ne sont pas impliqués dans la réalisation de la tâche de calcul. Cela permet de réduire drastiquement le volume de données à traiter et donc améliorer significativement la rapidité de mise en œuvre de l'invention. En outre, cela ne permet de considérer que les seules valeurs des compteurs relatifs aux ports impliqués dans la tâche de calcul. C'est-à-dire que la liste de valeurs extraites ne comportera pas de valeurs de compteurs pour des ports ne sont pas impliqués dans la tâche de calcul.

Comme représenté sur la figure 1, le dispositif 1 d'acquisition selon l'invention comprend un **module d'extraction de compteurs 40.** Ce module est apte à extraire les valeurs des compteurs des ports impliqués dans la tâche de calcul à partir de la liste de ports impliqués 135 et des valeurs enregistrées desdits compteurs.

De façon préférée, les compteurs considérés dans le cadre de l'invention sont des compteurs de performance associés aux ports et sont généralement utilisés pour surveiller les données transmises, les caractéristiques du transport et les erreurs générées par l'équipement. Les compteurs suivent avantageusement le volume des données transmises ou reçues, le nombre de paquets reçus ou envoyés, les erreurs comme par exemple le nombre de fois où une collision s'est produite avant que l'interface ne transmette une donnée avec succès ou le nombre de paquets ignorés et/ou le nombre de paquets reçus rejetés car il n'y avait pas d'espace tampon.

Le module d'extraction de compteurs 40 est en outre apte à acquérir au préalable les valeurs enregistrées desdits compteurs. Les valeurs enregistrées des compteurs des ports peuvent par exemple être enregistrées au niveau des commutateurs ou des nœuds. Ces valeurs correspondent donc à toutes les valeurs de compteurs de tous les ports de l'ensemble du réseau d'interconnexion. Dans ce cas, le module d'extraction de compteurs 40 est apte à acquérir les valeurs au niveau des commutateurs 120 et des nœuds 110. Les valeurs des compteurs des ports de l'ensemble du réseau d'interconnexion peuvent aussi être enregistrées, par exemple par un gestionnaire réseau 500, dans un ou plusieurs fichiers 520 dédiés aux valeurs des compteurs des ports impliqués 135. Ces données peuvent être enregistrées sous différents formats tels que : OpenTSDB, InfluxDB, collectd, ou csv. Dans ce cas, le module d'extraction de compteurs 40 est apte à acquérir les valeurs au niveau d'un ou de plusieurs fichiers, de préférence plusieurs, de sauvegarde des valeurs de compteurs de ports.

Une tâche de calcul comporte une date de début et une date de fin. Partant, de façon avantageuse, le module d'extraction de compteurs est apte à comparer des valeurs des compteurs à la date de début et à la date de fin de la tâche, et à extraire des compteurs dont la valeur a augmenté entre le début et la fin de la tâche de calcul.

De façon plus particulière, si la différence est nulle ou non significative alors le compteur n'est pas extrait. Ainsi, un compteur dont la valeur reste constante au cours du temps ne sera pas extrait. Par non significatif, il faut comprendre que la différence est inférieure à un seuil prédéterminé. Par exemple, un compteur d'erreur ne sera pas sélectionné/extrait si la différence est inférieure à un seuil prédéterminé. Les seuils prédéterminés peuvent être fixés lors d'une étape de configuration du dispositif 1 selon l'invention et enregistrés dans un fichier de configuration.

En outre, le module d'extraction de compteurs 40 est apte à soustraire, pour chaque compteur, sa valeur à la date de début à sa valeur à la date de fin de façon à obtenir la progression de la valeur du compteur lors de la tâche de calcul.

De façon avantageuse, le dispositif 1 d'acquisition est apte à enregistrer, sur un ou plusieurs fichiers, les valeurs des compteurs des ports impliqués 135 dans la tâche de calcul. Ainsi, le dispositif peut accéder ou permettre l'accès aux différentes métriques sur chaque port impliqué 135 du réseau d'interconnexion 100. Ces données peuvent par exemple être enregistrées sous la forme d'une base de données RRD (terminologie anglo-saxonne Round-Robin database). Une telle base présente avantageusement une taille fixe.

Le dispositif 1 peut comprendre un module de mémorisation 60 apte à enregistrer les valeurs des compteurs des ports impliqués 135 dans la tâche de calcul, de préférence sous la forme d'une base de type round-robin. Le module de mémorisation 60 peut également être apte à enregistrer la topologie du réseau d'interconnexion 100.

Comme représenté sur la figure 1, le dispositif 1 d'acquisition selon l'invention peut également comprendre un module de génération de rapport 50. Ce module est apte à générer au moins un rapport d'analyse de performance à partir des valeurs des compteurs des ports impliqués dans la tâche de calcul.

Ce rapport d'analyse de performance permet d'évaluer la performance du réseau d'interconnexion 100 lors d'une tâche de calcul.

Le module de génération de rapport 50 peut par exemple être configuré pour recevoir une instruction comportant la désignation d'une ou plusieurs catégories de compteurs. Dans ce cas, le module de génération de rapport 50 est alors apte à générer un rapport d'analyse de performance comportant une liste de ports impliqués 135 et les valeurs du ou des compteurs désignés pour ces ports impliqués 135. Le module de génération de rapport 50 peut aussi être apte à recevoir une instruction comportant la désignation d'un ou plusieurs niveaux du réseau d'interconnexions. Dans ce cas, le module de génération de rapport est alors apte à générer un rapport d'analyse de performance portant sur, ou limité aux, un ou plusieurs niveaux du réseau d'interconnexion 100. Les instructions peuvent par exemple être transmises depuis une interface homme machine (IHM). De façon plus générale, le dispositif 1 est apte à recevoir, par exemple via une interface IHM, des identifiants de tâche de calcul, des identifiants de compteurs et/ou les niveaux du réseau d'interconnexion de façon à générer les rapports adéquats.

Le module de génération de rapport 50 peut être apte à réaliser une agrégation des valeurs de compteurs impliqués. Le module de génération de rapport est alors apte à générer un rapport d'analyse de performance comportant des valeurs agrégées des compteurs impliqués.

Le rapport d'analyse de performance peut avantageusement prendre une forme sélectionnée parmi : une ou plusieurs listes de valeurs associées à des ports par exemple sous la forme d'un tableau, des liens vers des valeurs de compteurs associées à des ports, un ou plusieurs graphiques représentant l'évolution desdits compteurs pendant ladite tâche de calcul.

En outre, comme cela est présenté en figure 1, le dispositif 1 d'acquisition peut comporter un module de communication 70 apte à émettre une instruction identifiant une tâche de calcul. Le module de communication 70 est configuré pour recevoir et transmettre des informations à des systèmes distants tels que des tablettes, des téléphones, des ordinateurs ou des serveurs et est ainsi apte à permettre la communication entre le dispositif 1 et un terminal distant, dont un client 400. Le module de communication 70 permet de transmettre les données sur au moins un réseau de communication et peut comprendre une communication filaire ou sans fil. L'interaction peut impliquer un logiciel applicatif utilisé par l'opérateur pour interagir avec le dispositif selon l'invention. Le logiciel applicatif peut comporter une interface graphique permettant de faciliter une interaction avec un opérateur. Un opérateur peut alors agir sur le terminal distant de façon à générer une instruction apte à être mise en œuvre par le dispositif 1.

Dans l'exemple représenté sur la Fig. 1, un client 400 accède au dispositif d'acquisition 1. Par exemple, le client 400 peut exécuter une application cliente qui est configurée pour communiquer avec le dispositif d'acquisition 1. L'application cliente peut être un navigateur ou une autre application de communication basée sur le client. En réponse à l'accès par le client 400, le dispositif d'acquisition 1 peut générer une interface utilisateur qui peut être envoyée au client 400.

Comme cela vient d'être présenté, le dispositif 1 d'acquisition selon l'invention comprend une pluralité de **modules.** Ces modules **10, 20, 30, 40, 50, 60, 70** sont distincts sur la figure 1 mais l'invention peut prévoir divers types d'agencement comme par exemple un seul module cumulant l'ensemble des fonctions décrites ici. De même, ces moyens peuvent être divisés en plusieurs cartes électroniques ou bien rassemblés sur une seule carte électronique. De même, lorsque l'on prête une action à un dispositif ou un module celle-ci est en fait effectuée par un microprocesseur du dispositif ou module commandé par des codes instructions enregistrés dans une mémoire. Si l'on prête une action à une application, celle-ci est en fait effectuée par un microprocesseur du dispositif dans une mémoire duquel les codes instructions correspondant à l'application sont enregistrés. Lorsqu'un dispositif ou module émet ou reçoit un message, ce message est émis ou reçu par une interface de communication. Les mémoires évoquées dans cette invention peuvent correspondre à une mémoire vive et/ou une mémoire de masse. La mémoire de masse peut- être un support tel qu'une carte mémoire, ou un disque dur hébergé par un serveur distant.

Selon un autre aspect, l'invention porte sur un **procédé** d'acquisition 200 de valeurs de compteurs associées à une tâche de calcul selon l'invention. La tâche de calcul est généralement commandée par un client 400 et mise en œuvre sur un réseau d'interconnexion 100. Ce procédé est mis en œuvre par un dispositif et de façon préférée par un dispositif 1 d'acquisition selon l'invention.

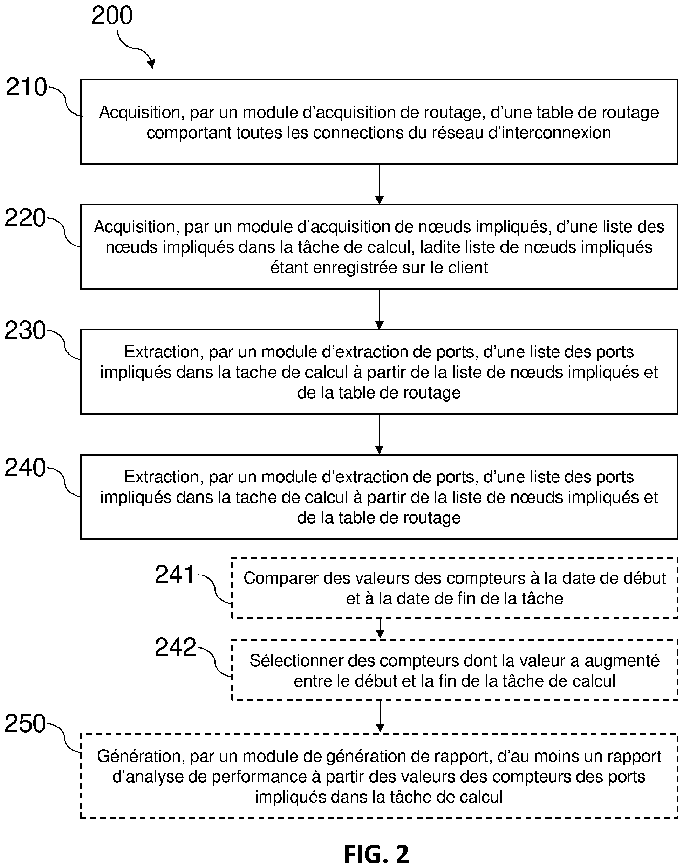

Comme présenté en **figure 2****,** le procédé comporte une étape d'acquisition 210, par un module d'acquisition de routage, d'une table de routage comportant toutes les connections du réseau d'interconnexion, un étape d'acquisition 220, par un module d'acquisition de nœuds impliqués, d'une liste des nœuds impliqués dans la tâche de calcul, ladite liste de nœuds impliqués étant enregistrée sur le client, une étape d'extraction 230, par un module d'extraction de ports, d'une liste des ports impliqués dans la tâche de calcul à partir de la liste de nœuds impliqués et de la table de routage, et une étape d'extraction 240, par un module d'extraction de compteurs, des valeurs des compteurs des ports impliqués dans la tâche de calcul à partir de la liste de ports impliqués et des valeurs enregistrées desdits compteurs.

Ainsi, un utilisateur peut extraire les valeurs des compteurs des ports impliqués dans la tâche de calcul à partir par exemple d'une instruction comportant un identifiant unique de la tâche de calcul.

Lors de l'étape d'extraction 240 des valeurs des compteurs des ports impliqués dans la tâche de calcul, le procédé peut comprendre avantageusement des sous-étapes suivantes :
- comparer 241 des valeurs des compteurs à la date de début et à la date de fin de la tâche, et
- sélectionner 242 des compteurs dont la valeur a augmenté entre le début et la fin de la tâche de calcul

En outre, le procédé peut comprendre une étape de génération 250, par un module de génération de rapport, d'au moins un rapport d'analyse de performance à partir des valeurs des compteurs des ports impliqués dans la tâche de calcul.

En outre, avantageusement, le procédé selon l'invention peut comporter une étape de génération d'instruction permettant une représentation graphique des valeurs de compteurs de ports impliqués dans la tâche de calcul. Ces graphiques peuvent présenter les principaux compteurs ayant évolué lors de la tâche de calcul. De façon préférée, au moins un graphique est généré automatiquement à la fin de chacune des tâches de calcul. De façon encore plus préférée, le procédé comporte la sélection avec la tâche de calcul d'un ou plusieurs compteurs qui feront l'objet de la génération de graphique.

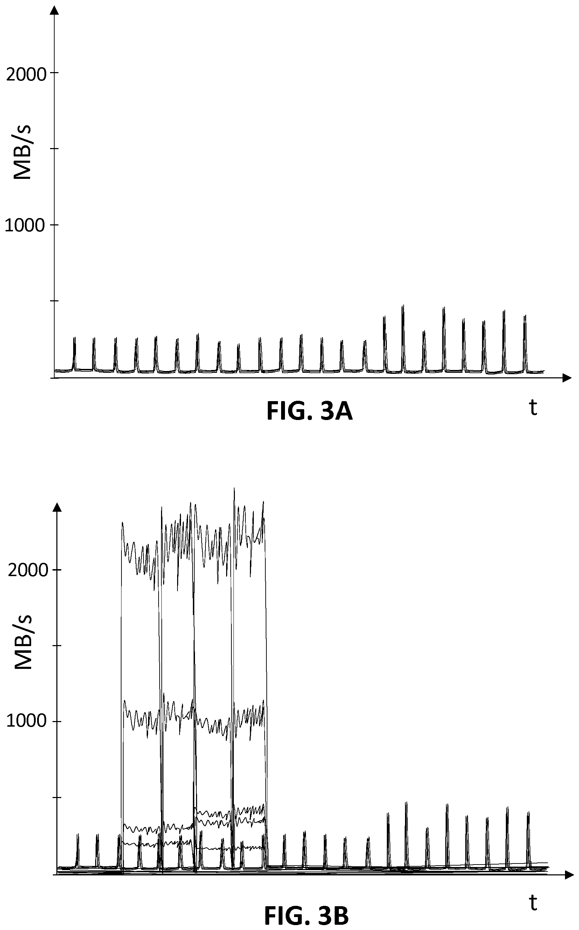

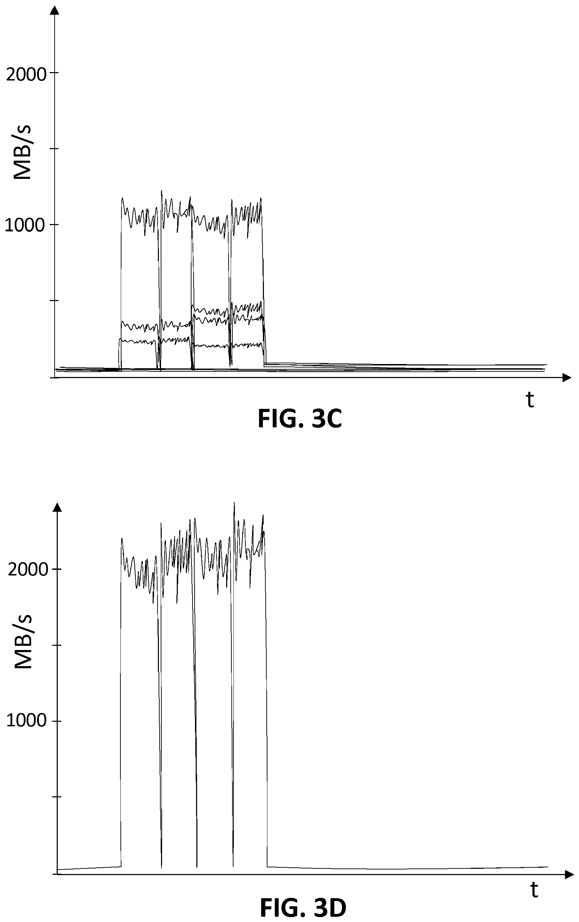

Les **figures 3** représentent le suivi des valeurs du compteur « données transmises » en fonction du temps. Ces figures, de la figure 3B à la figure 3D illustrent la mise en œuvre de l'invention et son utilisation dans le cadre de la génération de rapports d'analyse de performance Ces rapports d'analyse de performance peuvent être représentés sous la forme de graphiques pour identifier une source de ralentissement dans une tâche de calcul.

La figure 3A présente un exemple de graphique pouvant être généré classiquement lorsque l'utilisateur sélectionne manuellement tous les ports des nœuds impliqués dans sa tâche de calcul. L'étude de la figure 3A montre que la tâche de calcul a nécessité sur les nœuds impliqués une bande passante de l'ordre de 300 MB/s. Or cette valeur est loin d'une saturation des équipements, ladite saturation pouvant par exemple apparaitre lorsque la bande passante utilisée est supérieure à 1500 MB/s.

Dans le cadre de l'invention, l'utilisateur met en œuvre le dispositif selon l'invention pour générer un second graphique représenté en figure 3B. Le graphique de la figure 3B comporte les valeurs de bandes passantes en fonction du temps de tous les ports impliqués dans la tâche de calcul. Ainsi, cela comporte les ports des nœuds impliqués dans la tâche de calcul mais également les ports impliqués dans la tâche de calcul des commutateurs du réseau d'interconnexion. L'étude de la figure 3B montre que la tâche de calcul a nécessité sur certains ports une bande passante de l'ordre de 1000 MB/s, normalement non saturante, mais également sur d'autres ports une bande passante supérieure à 2000 MB/s et donc susceptible de générer une saturation des équipements.

Toujours dans le cadre de l'invention, l'utilisateur peut avantageusement spécifier au dispositif qu'il souhaite limiter la génération de rapport aux ports situés sur le premier niveau du réseau d'interconnexion. Le rapport d'analyse de performance fait alors l'objet d'une représentation graphique tel que présenté en figure 3C. L'étude de la figure 3C montre que la tâche de calcul n'a pas nécessité sur les ports impliqués du premier niveau du réseau de bande passante supérieure à 1500 MB/s.

La même analyse réalisée sur les ports du second niveau du réseau d'interconnexion et présentée en figure 3D montre au contraire que ces ports présentent une bande passante supérieure à 2000 MB/s et ont donc été susceptibles de générer une saturation des équipements.

Dans ce contexte, par exemple selon une instruction transmise par le client de l'utilisateur, le dispositif selon l'invention peut agréger les valeurs de compteurs de façon à générer une information directement interprétable par l'utilisateur telle que le tableau 1 ci - dessous.

**Tableau 1 : Top 5 des valeurs des compteurs de données transmises**

| **Position** | **ID port** | **Valeur compteur** |
|---|---|---|
| 1 | /switch/mib101/line12/chip1/port18 | 1 576 634 571,25 |
| 2 | /switch/mib102/line12/chip1/port18 | 1 534 297 271,47 |
| 3 | /switch/mc1032-isw/board0/chip1/port7 | 1 074 122 538,67 |
| 4 | /switch/mc1032-isw/board0/chip1/port15 | 1 055 855 343,27 |
| 5 | /switch/mc1032-isw/board0/chip1/port1 | 1 055 269 874,99 |

Ainsi, il est possible que la tâche de calcul ait été impactée par d'autres tâches de calcul ayant utilisé des ports impliqués dans la tâche de calcul utilisée comme les ports 18 et 7 mentionnés dans le tableau 1.

Selon un autre aspect, l'invention porte sur un **procédé de planification 300 d'une tâche de calcul mise en œuvre sur un réseau d'interconnexion 100.** Ce procédé peut par exemple être mis en œuvre par un client 400.

Comme cela a déjà été abordé, les tâches de calcul sont généralement planifiées par des gestionnaires de ressources et de tâches. Ainsi, le client permet la mise en œuvre d'au moins un gestionnaire de tâche et de ressources (e.g. LSF, PBSpro, Moab, Slurm ou Torque/Maui) capable de gérer la mise en œuvre d'une tâche de calcul sur un réseau d'interconnexion. Le gestionnaire de tâche peut assigner un identifiant unique à une tâche de calcul, préciser les paramètres nécessaires à la tâche de calcul, éventuellement spécifier des nœuds à assigner à la tâche de calcul et mémoriser les nœuds étant utilisé par la tâche de calcul.

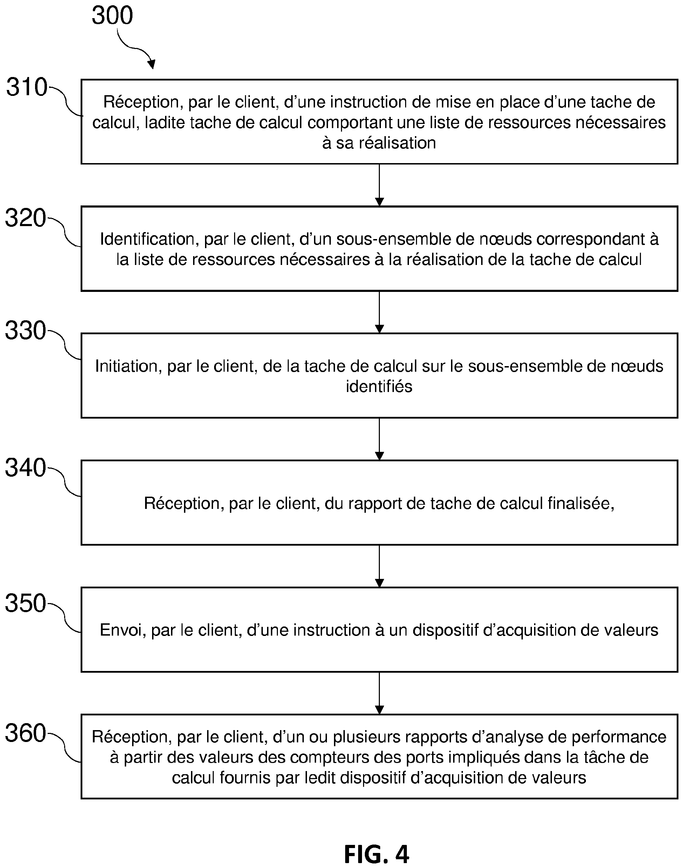

Comme présenté en **figure 4****,** le procédé de planification selon l'invention comporte généralement une étape de réception 310 d'une instruction de mise en place d'une tâche de calcul, ladite tâche de calcul comportant une liste de ressources nécessaires à sa réalisation, Le gestionnaire de ressource est capable de recevoir les soumissions de tâches de calcul d'utilisateurs et de gérer leur mise en œuvre dans le temps et dans l'espace du réseau d'interconnexion.

Il y a alors une identification 320 d'un sous-ensemble de nœuds correspondant à la liste de ressources nécessaires à la réalisation de la tâche de calcul, puis une initiation 330 de la tâche de calcul sur le sous-ensemble de nœuds identifiés. Les gestionnaires permettent ainsi un ordonnancement des tâches de calcul et de façon à ce qu'un système puisse choisir les ressources (i.e. nœuds) à attribuer aux tâches et les dates de lancement. L'ordonnancement est défini suivant une politique qui se traduit par l'utilisation d'algorithmes d'ordonnancement et de nombreux critères et paramètres permettant de guider et cadrer les allocations et les priorités.

Lorsque la tâche de calcul est finalisée, le gestionnaire de ressources réalise un « épilogue de la tâche de calcul » lors duquel il y aura réception 340 du rapport de tâche de calcul finalisée. C'est durant cet épilogue que le client pourra envoyer 350 une instruction au dispositif d'acquisition de valeurs, et plus particulièrement au module de communication 70, selon l'invention puis réceptionner 360 un ou plusieurs rapports d'analyse de performance à partir des valeurs des compteurs des ports impliqués dans la tâche de calcul.

Ainsi, la présente invention permet d'acquérir, de compiler, d'enregistrer et notamment de visualiser les divers compteurs d'un réseau d'interconnexion sur les ports des équipements impliqués dans une tâche de calcul, y compris les ports de commutateurs. Cette visualisation peut notamment être faite par l'intermédiaire de graphiques (cf. figures 3B, 3C, 3D) pouvant être générés à partir des rapports d'analyse de performance. Avantageusement, un utilisateur pourra facilement naviguer dans ce jeu de données (beaucoup plus restreint que l'ensemble des valeurs de compteurs du réseau d'interconnexion) et pourra identifier le cas échéant la source de ralentissement ou de déviation dans ces résultats.

En outre, le dispositif est à même de sélectionner et concentrer en une seule mémoire ou interface toutes les données permettant un diagnostic sur une tâche de calcul. Dans l'art antérieur ces diagnostics se font plutôt au niveau du réseau dans sa globalité ou d'un sous ensemble de ports sans que cela soit lié à une tâche de calcul particulière.

Tous ces avantages contribuent donc à réduire les temps de traitement de l'analyse de la performance d'un réseau d'interconnexion dans le cadre d'une tâche de calcul et également à réduire les volumes de données gérés et manipulés.

## Revendications

1. Dispositif (1) d'acquisition de valeurs de compteurs associées à une tâche de calcul mise en œuvre sur un réseau d'interconnexion (100), ledit réseau d'interconnexion (100) comportant une pluralité de nœuds (110) interconnectés par l'intermédiaire de commutateurs (120), lesdits nœuds et commutateurs comportant une pluralité de ports (130) associés à des compteurs, les valeurs desdits compteurs étant enregistrées au cours du temps, ladite tâche de calcul impliquant un sous ensemble de ports associé à des sous-ensembles de nœuds et de commutateurs, et ledit dispositif comprenant :
- Un module d'acquisition de routage (10), apte à acquérir une table de routage comportant toutes les connexions du réseau d'interconnexion, et **caractérisé par**:
- Un module d'acquisition de nœuds impliqués (20), apte à acquérir une liste des nœuds impliqués dans la tâche de calcul,
- Un module d'extraction de ports (30), apte à extraire une liste des ports impliqués dans la tâche de calcul à partir de la liste de nœuds impliqués et de la table de routage, et
- Un module d'extraction de compteurs (40), apte à extraire les valeurs des compteurs des ports impliqués dans la tâche de calcul à partir de la liste de ports impliqués et des valeurs enregistrées desdits compteurs.

2. Dispositif selon la revendication 1, **caractérisé en ce que** la tâche de calcul comporte une date de début et une date de fin, et **en ce que** le module d'extraction de compteurs (40) est apte à :
- comparer des valeurs des compteurs à la date de début et à la date de fin de la tâche, et
- sélectionner des compteurs dont la valeur a augmenté entre le début et la fin de la tâche de calcul.

3. Dispositif selon l'une des revendications 1 ou 2, **caractérisé en ce qu'**il comprend en outre un module de génération de rapport (50), apte à générer au moins un rapport d'analyse de performance à partir des valeurs des compteurs des ports impliqués dans la tâche de calcul.

4. Dispositif selon la revendication 3, **caractérisé en ce que** le module de génération de rapport (50) est apte à recevoir une instruction, ladite instruction comportant la désignation d'une ou plusieurs catégories de compteurs et ledit module de génération de rapport est alors apte à générer un rapport d'analyse de performance comportant une liste de ports impliqués et les valeurs du ou des compteurs désignés pour ces ports.

5. Dispositif selon l'une des revendications 3 ou 4, **caractérisé en ce que** le module de génération de rapport (50) est apte à recevoir une instruction, ladite instruction comportant la désignation d'un ou plusieurs niveaux du réseau d'interconnexions et ledit module de génération de rapport est alors apte à générer un rapport d'analyse de performance portant sur lesdits un ou plusieurs niveaux désignés du réseau d'interconnexions.

6. Dispositif selon l'une quelconque des revendications 3 à 5, **caractérisé en ce que** le module de génération de rapport (50) comporte des moyens pour réaliser une agrégation des valeurs de compteurs impliqués, ledit module de génération de rapport est alors apte à générer un rapport d'analyse de performance comportant des valeurs agrégées des compteurs impliqués.

7. Dispositif selon l'une quelconque des revendications 1 à 6, **caractérisé en ce qu'**il comprend en outre un module de mémorisation (60) apte à enregistrer des tables de routage, des listes de nœuds impliqués dans une tache de calcul, des listes de ports impliqués dans une tache de calcul, des rapports d'analyse de performance et/ou les valeurs des compteurs des ports impliqués dans une tâche de calcul, de préférence sous la forme d'une base de type round-robin.

8. Dispositif selon l'une quelconque des revendications 1 à 7, **caractérisé en ce que** le module d'acquisition de routage (10) est apte à réaliser une exploration du réseau d'interconnexion de façon à collecter les tables de routage, de préférence en temps réel.

9. Dispositif selon la revendication 8, **caractérisé en ce que** le module d'acquisition de routage (10) est apte à enregistrer un historique de la topologie du réseau d'interconnexion (100).

10. Dispositif selon l'une quelconque des revendications 1 à 9, **caractérisé en ce que** le module d'extraction de ports (30), est apte à extraire une liste des ports impliqués comportant seulement les ports impliqués dans la tâche de calcul.

11. Dispositif selon l'une quelconque des revendications 1 à 10, **caractérisé en ce que** le module d'acquisition de nœuds impliqués (20) est apte à recevoir la date de début et la date de fin de la tâche de calcul et **en ce que** le module d'extraction de compteurs (40) est apte à comparer des valeurs des compteurs à la date de début et à la date de fin de la tâche, et à extraire des compteurs dont la valeur a augmenté entre le début et la fin de la tâche de calcul.

12. Procédé d'acquisition (200), par un dispositif, de valeurs de compteurs associées à une tâche de calcul commandée par un client (400) et mise en œuvre sur un réseau d'interconnexion (100), ledit réseau d'interconnexion (100) comportant une pluralité de nœuds (110) interconnectés par l'intermédiaire de commutateurs (120), lesdits nœuds (110) et commutateurs (120) comportant une pluralité de ports (130) associés à des compteurs, les valeurs desdits compteurs étant enregistrées au cours du temps, ladite tâche de calcul impliquant un sous ensemble de ports associé à des sous-ensembles de nœuds et de commutateurs, et ledit procédé comprenant les étapes suivantes :
- Acquisition (210), par un module d'acquisition de routage, d'une table de routage comportant toutes les connections du réseau d'interconnexion, et **caractérisé par**:
- Acquisition (220), par un module d'acquisition de nœuds impliqués, d'une liste des nœuds impliqués dans la tâche de calcul, ladite liste de nœuds impliqués étant enregistrée sur le client (400),
- Extraction (230), par un module d'extraction de ports, d'une liste des ports impliqués dans la tâche de calcul à partir de la liste de nœuds impliqués et de la table de routage,
- Extraction (240), par un module d'extraction de compteurs, des valeurs des compteurs des ports impliqués dans la tâche de calcul à partir de la liste de ports impliqués et des valeurs enregistrées desdits compteurs.

13. Procédé de planification (300), par un client (400), d'une tâche de calcul mise en œuvre sur un réseau d'interconnexion (100), ledit réseau d'interconnexion (100) comportant une pluralité de nœuds (110) interconnectés par l'intermédiaire de commutateurs (120), lesdits nœuds (110) et commutateurs (120) comportant une pluralité de ports (130) associés à des compteurs, les valeurs desdits compteurs étant enregistrées au cours du temps, ladite tâche de calcul impliquant un sous ensemble de ports associé à des sous-ensembles de nœuds et de commutateurs, ledit procédé étant **caractérisé par** les étapes suivantes :
- Réception (310), par le client (400), d'une instruction de mise en place d'une tâche de calcul, ladite tâche de calcul comportant une liste de ressources nécessaires à sa réalisation,
- Identification (320), par le client (400), d'un sous-ensemble de nœuds correspondant à la liste de ressources nécessaires à la réalisation de la tâche de calcul,
- Initiation (330), par le client (400), de la tâche de calcul sur le sous-ensemble de nœuds identifiés,
- Réception (340), par le client (400), du rapport de tâche de calcul finalisée.

14. Procédé de planification selon la revendication 13, **caractérisé en ce qu'**il comprend en outre, au moment de l'étape de réception, par le client, du rapport de tâche de calcul finalisée, les étapes suivantes :
- Envoi (350), par le client (400), d'une instruction à un dispositif (1) d'acquisition de valeurs selon l'une des revendications 3 à 6 et
- Réception (360), par le client (400), d'un ou plusieurs rapports d'analyse de performance à partir des valeurs des compteurs des ports impliqués dans la tâche de calcul fournis par ledit dispositif (1) d'acquisition de valeurs.

## Patentansprüche

1. Vorrichtung (1) zur Erfassung von Zählerwerten, die einer Berechnungsaufgabe zugeordnet sind, die in einem Verbundnetz (100) implementiert wird, wobei das Verbundnetz (100) eine Vielzahl von Knoten (110) umfasst, die über Schalter (120) miteinander verbunden sind, wobei die Knoten und Schalter eine Vielzahl von Anschlüssen (130) aufweisen, die Zählern zugeordnet sind, wobei die Werte der Zähler über die Zeit aufgezeichnet werden, wobei die Berechnungsaufgabe eine Teilmenge von Anschlüssen impliziert, die Teilmengen von Knoten und Schaltern zugeordnet sind, und wobei die Vorrichtung umfasst:
- Ein Modul zur Leitwegerfassung (10), das eine Leitwegtabelle erfassen kann, die alle Verbindungen des Verbundnetzes umfasst, und **gekennzeichnet ist durch**:
- Ein Modul zur Erfassung beteiligter Knoten (20), das eine Liste der an der Berechnungsaufgabe beteiligten Knoten erfassen kann,
- Ein Modul zur Extraktion von Anschlüssen (30), das auf der Basis der Liste der beteiligten Knoten und der Leitwegtabelle eine Liste der an der Berechnungsaufgabe beteiligten Anschlüsse extrahieren kann, und
- Ein Modul zur Extraktion von Zählern (40), das auf der Basis der Liste der beteiligten Anschlüsse und der aufgezeichneten Werte der Zähler die Werte der Zähler der an der Berechnungsaufgabe beteiligten Anschlüsse extrahieren kann.

2. Vorrichtung nach Anspruch 1, **dadurch gekennzeichnet, dass** die Berechnungsaufgabe ein Startdatum und ein Enddatum aufweist, und dass das Modul zur Extraktion von Zählern (40) in der Lage ist zum:
- Vergleichen der Werte der Zähler hinsichtlich Startdatum und Enddatum der Aufgabe, und
- Auswählen der Zähler, deren Wert zwischen dem Anfang und dem Ende der Berechnungsaufgabe gestiegen ist.

3. Vorrichtung nach einem der Ansprüche 1 oder 2, **dadurch gekennzeichnet, dass** sie ferner ein Modul zur Berichterzeugung (50) umfasst, das auf der Basis der Werte der Zähler der an der Berechnungsaufgabe beteiligten Anschlüsse zumindest einen Leistungsanalysebericht erzeugen kann.

4. Vorrichtung nach Anspruch 3, **dadurch gekennzeichnet, dass** das Modul zur Berichterzeugung (50) eine Anweisung empfangen kann, wobei die Anweisung die Bezeichnung einer oder mehrerer Kategorien von Zählern enthält und das Modul zur Berichterzeugung dann in der Lage ist, einen Leistungsanalysebericht zu erzeugen, der eine Liste der beteiligten Anschlüsse und die Werte des Zählers oder der Zähler enthält, die für diese Anschlüsse bezeichnet sind.

5. Vorrichtung nach einem der Ansprüche 3 oder 4, **dadurch gekennzeichnet, dass** das Modul zur Berichterzeugung (50) eine Anweisung empfangen kann, wobei die Anweisung die Bezeichnung einer oder mehrerer Ebenen des Verbundnetzes enthält und das Modul zur Berichterzeugung dann in der Lage ist, einen Leistungsanalysebericht über die eine oder mehrere bezeichnete Ebenen des Verbundnetzes zu erzeugen.

6. Vorrichtung nach einem der Ansprüche 3 bis 5, **dadurch gekennzeichnet, dass** das Modul zur Berichterzeugung (50) Mittel zum Durchführen einer Aggregation der Werte der beteiligten Zähler aufweist, wobei das Modul zur Berichterzeugung dann einen Leistungsanalysebericht erzeugen kann, der aggregierte Werte der beteiligten Zähler enthält.

7. Vorrichtung nach einem der Ansprüche 1 bis 6, **dadurch gekennzeichnet, dass** sie ferner ein Speichermodul (60) umfasst, das Leitwegtabellen, Listen von an einer Berechnungsaufgabe beteiligten Knoten, Listen von an einer Berechnungsaufgabe beteiligten Anschlüssen, Leistungsanalyseberichte und/oder die Zählerwerte der an einer Berechnungsaufgabe beteiligten Anschlüsse, vorzugsweise in Form eines Rundlaufverfahrens, aufzeichnen kann.

8. Vorrichtung nach einem der Ansprüche 1 bis 7, **dadurch gekennzeichnet, dass** das Modul zur Leitwegerfassung (10) eine Untersuchung des Verbundnetzes durchführen kann, um die Leitwegtabellen, vorzugsweise in Echtzeit, zu sammeln.

9. Vorrichtung nach Anspruch 8, **dadurch gekennzeichnet, dass** das Modul zur Leitwegerfassung (10) einen Verlauf der Topologie des Verbundnetzes (100) aufzeichnen kann.

10. Vorrichtung nach einem der Ansprüche 1 bis 9, **dadurch gekennzeichnet, dass** das Modul zur Extraktion von Anschlüssen (30) eine Liste der beteiligten Anschlüsse extrahieren kann, die nur die an der Berechnungsaufgabe beteiligten Anschlüsse enthält.

11. Vorrichtung nach einem der Ansprüche 1 bis 10, **dadurch gekennzeichnet, dass** das Modul zur Erfassung beteiligter Knoten (20) das Startdatum und das Enddatum der Berechnungsaufgabe empfangen kann und dass das Modul zur Extraktion von Zählern (40) die Werte der Zähler hinsichtlich des Startdatums und des Enddatums der Aufgabe vergleichen und Zähler extrahieren kann, deren Wert zwischen dem Anfang und dem Ende der Berechnungsaufgabe gestiegen ist.

12. Verfahren zur Erfassung (200) durch eine Vorrichtung von Werten von Zählern, die einer Berechnungsaufgabe zugeordnet sind, die durch einen Client (400) gesteuert und in einem Verbundnetz (100) implementiert wird, wobei das Verbundnetz (100) eine Vielzahl von Knoten (110) umfasst, die über Schalter (120) miteinander verbunden sind, wobei die Knoten (110) und Schalter (120) eine Vielzahl von Anschlüssen (130) aufweisen, die Zählern zugeordnet sind, wobei die Werte der Zähler über die Zeit aufgezeichnet werden, wobei die Berechnungsaufgabe eine Teilmenge von Anschlüssen impliziert, die Teilmengen von Knoten und Schaltern zugeordnet sind, und wobei das Verfahren folgende Schritte umfasst:
- Erfassen (210), durch ein Modul zur Leitwegerfassung, einer Leitwegtabelle, die alle Verbindungen des Verbundnetzes enthält und **gekennzeichnet ist durch**:
- Erfassen (220), **durch** ein Modul zur Erfassung beteiligter Knoten, einer Liste der an der Berechnungsaufgabe beteiligten Knoten, wobei die Liste der beteiligten Knoten im Client (400) aufgezeichnet wird,
- Extrahieren (230), **durch** ein Modul zur Extraktion von Anschlüssen, einer Liste der an der Berechnungsaufgabe beteiligten Knoten auf der Basis der Liste der beteiligten Knoten und der Leitwegtabelle,
- Extrahieren (240), **durch** ein Modul zur Extraktion von Zählern, der Werte der Zähler der an der Berechnungsaufgabe beteiligten Anschlüsse auf der Basis der Liste der beteiligten Anschlüsse und der aufgezeichneten Werte der Zähler.

13. Verfahren zur Planung (300) durch einen Client (400) einer in einem Verbundnetz (100) implementierten Berechnungsaufgabe, wobei das Verbundnetz (100) eine Vielzahl von Knoten (110) umfasst, die über Schalter (120) miteinander verbunden sind, wobei die Knoten (110) und Schalter (120) eine Vielzahl von Anschlüssen (130) aufweisen, die Zählern zugeordnet sind, wobei die Werte der Zähler über die Zeit aufgezeichnet werden, wobei die Berechnungsaufgabe eine Teilmenge von Anschlüssen impliziert, die Teilmengen von Knoten und Schaltern zugeordnet sind, wobei das Verfahren **gekennzeichnet ist durch** folgende Schritte:
- Empfangen (310), durch den Client (400), einer Anweisung zur Umsetzung einer Berechnungsaufgabe, wobei die Berechnungsaufgabe eine Liste der für die Durchführung benötigten Ressourcen umfasst,
- Identifizieren (320), durch den Client (400), einer Teilmenge von Knoten, die der Liste der für die Durchführung der Berechnungsaufgabe benötigten Ressourcen entsprechen,
- Einleiten (330), durch den Client (400), der Berechnungsaufgabe, an der Teilmenge der identifizierten Knoten,
- Empfangen (340), durch den Client (400), des Berichtes zur abgeschlossenen Berechnungsaufgabe.

14. Verfahren zur Planung nach Anspruch 13, **dadurch gekennzeichnet, dass** es weiter zum Zeitpunkt des Schrittes des Empfangens, durch den Client, des Berichtes zur abgeschlossenen Berechnungsaufgabe folgende Schritte umfasst:
- Senden (350), durch den Client (400), einer Anweisung an eine Vorrichtung (1) zur Erfassung von Werten nach einem der Ansprüche 3 bis 6 und
- Empfangen (360), durch den Client (400), von einem oder mehreren Leistungsanalyseberichten auf der Basis der Werte der Zähler der an der Berechnungsaufgabe beteiligten Anschlüsse, welche von der Vorrichtung (1) zur Erfassung von Werten bereitgestellt werden.

## Claims

1. A device (1) for acquiring counter values associated with a computing task implemented on an interconnection network (100), said interconnection network (100) including a plurality of nodes (110) interconnected by means of switches (120), said nodes and switches including a plurality of ports (130) associated with counters, the values of said counters being recorded over time, said computing task involving a subset of ports associated with subsets of nodes and switches, and said device comprising:
- A module for acquiring a routing (10), able to acquire a routing table including all the connections of the interconnection network, and **characterized by**:
- A module for acquiring involved nodes (20), able to acquire a list of the nodes involved in the computing task,
- A module for extracting ports (30), able to extract a list of the ports involved in the computing task from the list of involved nodes and the routing table, and
- A module for extracting counters (40), able to extract the values of the counters of the ports involved in the computing task from the list of involved ports and recorded values of said counters.

2. The device according to claim 1, **characterized in that** the computing task includes a start date and an end date, and **in that** the counter extraction module (40) is able to:
- compare values of the counters on the start date and on the end date of the task, and
- select counters whose value has increased between the start and the end of the computing task.

3. The device according to any of claims 1 or 2, **characterized in that** it further comprises a report generation module (50), able to generate at least one performance analysis report from the values of the counters of the ports involved in the computing task.

4. The device according to claim 3, **characterized in that** the report generation module (50) is able to receive an instruction, said instruction including the designation of one or more categories of counters and said report generation module is then able to generate a performance analysis report including a list of involved ports and the values of the counter (s) designated for these ports.

5. The device according to any of claims 3 or 4, **characterized in that** the report generation module (50) is able to receive an instruction, said instruction including the designation of one or more levels of the interconnection network and said report generation module is then able to generate a performance analysis report relating to said one or more designated levels of the interconnection network.

6. The device according to any one of claims 3 to 5, **characterized in that** the report generation module (50) includes means for performing an aggregation of the values of involved counters, said report generation module is then able to generate a performance analysis report including aggregated values of the involved counters.

7. The device according to any one of claims 1 to 6, **characterized in that** it further comprises a storage module (60) able to record routing tables, lists of nodes involved in a computing task, lists of ports involved in a computing task, performance analysis reports and/or values of the counters of the ports involved in a computing task, preferably in the form of a round-robin type base.

8. The device according to any one of claims 1 to 7, **characterized in that** the routing acquisition module (10) is able to carry out a scanning of the interconnection network so as to collect the routing tables, preferably in real time.

9. The device according to claim 8, **characterized in that** the routing acquisition module (10) is able to record a history of the interconnection network (100) topology.

10. The device according to any one of claims 1 to 9, **characterized in that** the port extraction module (30) is able to extract a list of the involved ports including only the ports involved in the computing task.

11. The device according to any one of claims 1 to 10, **characterized in that** the involved-node acquisition module (20) is able to receive the start date and the end date of the computing task and **in that** the counter extraction module (40) is able to compare values of the counters on the start date and on the end date of the task, and to extract counters whose value has increased between the start and the end of the computing task.

12. A method for acquiring (200), by a device, counter values associated with a computing task ordered by a client (400) and implemented on an interconnection network (100), said interconnection network (100) including a plurality of nodes (110) interconnected by means of switches (120), said nodes (110) and switches (120) including a plurality of ports (130) associated with counters, the values of said counters being recorded over time, said computing task involving a subset of ports associated with subsets of nodes and switches, and said method comprising the following steps:
- Acquiring (210), by a routing acquisition module, a routing table including all the connections of the interconnection network, and **characterized by**:
- Acquiring (220), by an involved-node acquisition module, a list of nodes involved in the computing task, said list of involved nodes being registered on the client (400),
- Extracting (230), by a port extraction module, a list of the ports involved in the computing task from the list of involved nodes and the routing table,
- Extracting (240), by a counter extraction module, the values of the counters of the ports involved in the computing task from the list of involved ports and recorded values of said counters.

13. A method for planning (300), by a client (400), a computing task implemented on an interconnection network (100), said interconnection network (100) including a plurality of nodes (110) interconnected by means of switches (120), said nodes (110) and switches (120) including a plurality of ports (130) associated with counters, the values of said counters being recorded over time, said computing task involving a subset of ports associated with subsets of nodes and switches, said method being **characterized by** the following steps:
- Receiving (310), by the client (400), an instruction to set up a computing task, said computing task including a list of resources necessary for its implementation,
- Identifying (320), by the client (400), a subset of nodes corresponding to the list of resources necessary for the implementation of the computing task,
- Initiating (330), by the client (400), the computing task on the subset of identified nodes,
- Receiving (340), by the client (400), the finalized computing task report.

14. The planning method according to claim 13, **characterized in that** it further comprises, at the step of receiving, by the client, the finalized computing task report, the following steps:
- Sending (350), by the client (400), an instruction to a value acquisition device (1) according to any of claims 3 to 6 and
- Receiving (360), by the client (400), one or more performance analysis reports from the values of the counters of the ports involved in the computing task provided by said value acquisition device (1).
